# EUROPÄISCHE PATENTSCHRIFT

(11) **EP 3 743 184 B1**
(45) Veröffentlichungstag und Bekanntmachung des Hinweises auf die Patenterteilung: **16.07.2025**
(21) Anmeldenummer: 19703942.3
(22) Anmeldetag: 25.01.2019
(51) Int. Cl.: B01D 15/32, G01N 30/86, B01J 20/10, B01J 20/28, B01J 20/283

(54) **VERFAHREN ZUR BESTIMMUNG VON VERUNREINIGUNGEN IN POLYALKYLENETHERN UND DESSEN VERWENDUNG**
METHOD FOR DETERMINING IMPURITIES IN POLYALKYLENE ETHERS AND USE THEREOF
PROCÉDÉ DE DÉTERMINATION D'IMPURETÉS DANS DES POLYALKYLÈNE-ÉTHERS ET SON UTILISATION

(30) Priorität: 27.01.2018 DE 102018000650
(43) Veröffentlichungstag der Anmeldung: 02.12.2020
(60) Teilanmeldung: 25000065.0
(73) Patentinhaber: Friedrich-Schiller-Universität Jena (FSU), 07743 Jena (DE)
(72) Erfinder: SCHUBERT, Ulrich Sigmar, 07743 Jena (DE); NISCHANG, Ivo, 07743 Jena (DE); BRUNZEL, Michaela, 07743 Jena (DE)
(74) Vertreter: Ackermann, Joachim
(86) Internationale Anmeldenummer: PCT/EP2019/000023
(87) Internationale Veröffentlichungsnummer: WO 2019/145117

(56) Entgegenhaltungen:
- EP-A2- 1 308 723
- EP-A2- 1 308 723
- WO-A1-2006/096535
- DE-A1- 19 726 151
- DE-A1- 19 801 575
- JP-A- 2012 149 185
- JP-A- 2012 149 185
- JP-A- H08 165 343
- JP-A- H08 165 343
- US-A1- 2004 197 933
- US-A1- 2010 292 515
- US-B1- 6 455 639
- ANJA BAUMGAERTEL ET AL: "Characterization of poly(2-oxazoline) homo- and copolymers by liquid chromatography at critical conditions", JOURNAL OF CHROMATOGRAPHY A, ELSEVIER, AMSTERDAM, NL, vol. 1218, no. 46, 16 September 2011 (2011-09-16), pages 8370 - 8378, XP028325426, ISSN: 0021-9673, [retrieved on 20110922], DOI: 10.1016/J.CHROMA.2011.09.044
- ANJA BAUMGAERTEL ET AL: "Characterization of poly(2-oxazoline) homo- and copolymers by liquid chromatography at critical conditions", JOURNAL OF CHROMATOGRAPHY A, ELSEVIER, AMSTERDAM, NL, vol. 1218, no. 46, 16 September 2011 (2011-09-16), pages 8370 - 8378, XP028325426, ISSN: 0021-9673, [retrieved on 20110922], DOI: 10.1016/J.CHROMA.2011.09.044
- BARMAN B N ET AL: "Identification and quantification of polyethylene glycol types in polyethylene glycol methyl ether and polyethylene glycol vinyl ether", JOURNAL OF CHROMATOGRAPHY A, ELSEVIER, AMSTERDAM, NL, vol. 1216, no. 40, 2 October 2009 (2009-10-02), pages 6816 - 6823, XP026583486, ISSN: 0021-9673, [retrieved on 20090814], DOI: 10.1016/J.CHROMA.2009.08.024
- LEE D ET AL: "Identification and quantitation of trace impurities in fatty alcohol ethoxylates using HPLC and MALDI-TOF mass spectrometry", ANALYTICA CHIMICA ACTA, ELSEVIER, AMSTERDAM, NL, vol. 654, no. 1, 3 November 2009 (2009-11-03), pages 59 - 63, XP026698952, ISSN: 0003-2670, [retrieved on 20090503], DOI: 10.1016/J.ACA.2009.04.032
- LIYA TANG ET AL: "Separation and detection of bis-maleimide-polyethylene glycol and mono-maleimide-polyethylene glycol by reversed-phase high pressure liquid chromatography", JOURNAL OF CHROMATOGRAPHY A, vol. 1246, 22 March 2012 (2012-03-22), pages 117 - 122, XP028494988, ISSN: 0021-9673, [retrieved on 20120322], DOI: 10.1016/J.CHROMA.2012.03.044
- G. LAPIENIS ET AL: "Preparation of Monomethyl Ethers of Poly(ethylene glycol)s Free of the Poly(Ethylene Glycol)", JOURNAL OF BIOACTIVE AND COMPATIBLE POLYMERS, vol. 16, no. 3, 1 May 2001 (2001-05-01), US, pages 206 - 220, XP055585242, ISSN: 0883-9115, DOI: 10.1106/V7G8-R36H-BX1R-647G

## Beschreibung

Die Erfindung betrifft die Bestimmung von Verunreinigungen in aliphatischen Polyalkylenethern , insbesondere die Bestimmung von Polyolverunreinigungen in Polyalkylenglykolen.

Polyalkylenglykole werden auf vielen technischen Gebieten eingesetzt. Typische Beispiele für Polyalkylenglykole sind Polyethylenglykole (PEG). Dabei handelt es sich, je nach Kettenlänge, um flüssige oder feste, wasserlösliche und nichttoxische Polymere mit der allgemeinen Summenformel C₂ₙH₄ₙ₊₂Oₙ₊₁. Wegen ihre Eigenschaften werden diese vielfältig verwendet, beispielsweise als Wirkstoffträger in der Pharmazie, als Komponente von Kosmetikprodukten, in unterschiedlichsten industriellen Anwendungen oder in der zellbiologischen Forschung.

Ein weiteres Beispiel für Polyalkylenglykole sind Polypropylenglykole. Diese finden beispielsweise Verwendung in nicht-ionogenen Wasch- und Reinigungsmitteln, in Kunstharzen, als Gefrierschutzmittel, als Flotationsmittel oder als chemisches Zwischenprodukt.

Polyalkylenglykole enthalten häufig Polyolverunreinigungen- . Diese Verunreinigungen sind bei manchen Anwendungen unerwünscht.

Eines der wichtigsten pharmazeutisch relevanten Polymeren ist der gut etablierte Polyethylenglykolmonomethylether (mPEG), der auch von der Federal Drug Administration (FDA) für eine Reihe von Anwendungen zugelassen worden ist. Ein bekanntes Problem von höchster Bedeutung stellt die Existenz von PEG-Diolverunreinigungen (PEG-Diole) dar, die zu einer Vernetzung von Proteinen oder von anderen interessierenden pharmazeutischen Bestandteilen und damit zu Komplikationen führen können.

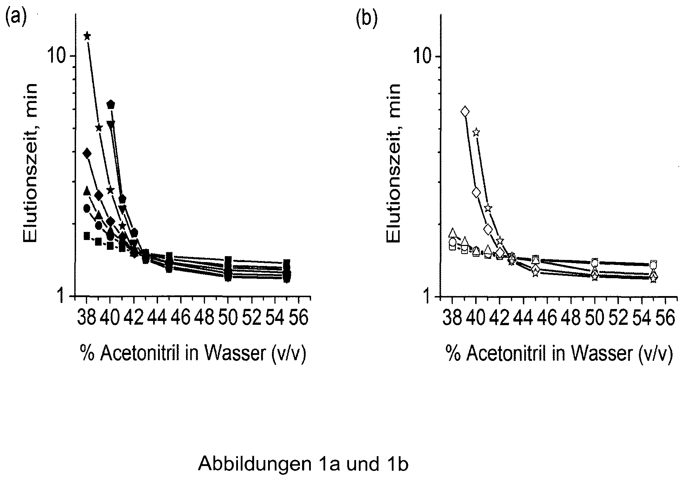

PEG-Diole und mPEG weisen sehr ähnliche physikalisch-chemische Eigenschaften auf (vergl. Abbildungen 1a und 1b) und daher sind PEG-Diolverunreinigungen schwierig zu identifizieren.

Zur analytischen Bestimmung von Verunreinigungen und zur präparativen Aufarbeitung von Polyalkylenglykolen bieten sich grundsätzlich chromatographische Verfahren an.

Zur Auftrennung oder Reinigung von Polymeren mittels chromatographischer Verfahren stehen unterschiedliche chromatographische Verfahren zur Verfügung. Dazu zählen insbesondere die Größenausschlusschromatographie (SEC), die Chromatographie unter kritischen Bedingungen (LCCC) und die Flüssig-Adsorptionschromatographie (LAC).

LCCC als Elutionsmodus kann eine Elution anbieten, die von der Kettenlänge des Makromoleküls unabhängig ist, d.h. die nur von der Endgruppe bestimmt wird. Grundsätzlich impliziert jedoch der Einfluß des alpha-Methoxyendes in mPEG, im Gegensatz zur Hydroxylgruppe in unmodifiziertem PEG nur sehr begrenzte Unterschiede in den hydrophilen/hydrophoben Eigenschaften der PEG-Makromoleküle (vergl. Abbildungen 1a und 1b), wodurch einfache Identifizierungsverfahren basierend auf der Flüssigchromatographie zu einem anspruchsvollen und bislang nicht gelösten Unterfangen werden.

Es gibt bislang keinen übergreifenden Ansatz, der eine einfache Identifikation von PEG-Diolverunreinigungen in mPEG mit ausgedehntem Bereich an Molmassen erlaubt. Grundsätzlich bestehen zwar Möglichkeiten chromatographischer Verfahren. Dabei handelt es sich immer um Modelle, die bei sehr begrenzten Bereichen von molaren Massen zum Einsatz kommen, z.B. bei molaren Massen von weit unterhalb 1000 g mol⁻¹ oder bei einzelnen Molmassen. Die Patentliteratur zu diesem Thema deutet darauf hin, dass eine Identifikation durch die Modifikation der terminalen Hydroxylgruppen an den Kettenenden mit Gruppen ausgesprochenem hydrophoben Charakter möglich ist, die in funktionalen omega-Kettenenden oder in funktionalen alpha- und omega-Kettenenden resultieren, welche eine Interaktion mit dem speziell gewählten Chromatographie-Sorbens zeigen. Die Effizienz solcher Kennzeichnungsreaktionen ist ebenso ein zu berücksichtigendes Problem.

Bisherige Bestimmungen von Verunreinigungen in Polyalkylenglykolen lassen also in mancherlei Hinsicht noch zu wünschen übrig. Solche Bestimmungen umfassen beispielsweise die analytische Erfassung von Verunreinigungen mittels SEC verbunden mit einer geeigneten Detektionsmethode. Diese Analysemethode kann gegebenenfalls mit anderen analytischen Methoden gekoppelt werden, beispielweise mit Magnetresonanzspektroskopie oder mit Massenspektrometrie.

Monolithische Formkörper haben sich als stationäre Phase bei der Aufreinigung und Trennung von Biopolymeren bewährt. EP 1 629 887 A1, WO 2006/013043 A1, DE 198 01 575 A1 und DE 197 26 151 A1 beschreiben solche Verfahren.

Die Herstellung von monolithischen oder partikulären Sorbenzien mit einheitlicher Porengröße wird in DE 102 58 491 A1 beschrieben.

DE 197 26 164 A1 offenbart ummantelte monolithische Sorbenzien.

In der WO 2005/075976 A2 wird ein Trennverfahren beschrieben, bei dem ein kapillares Trennverfahren mit Massenspektrometrie gekoppelt wurde. Das Verfahren wird vorzugsweise unter Einsatz eines monolithischen Sorbens durchgeführt.

Es wurde jetzt ein chromatographisches Verfahren gefunden, das hervorragend zur Bestimmung von Polyolverunreinigungen in Polyalkylenglykolen geeignet ist. Mit dem erfindungsgemäßen Verfahren lassen sich Polyolverunreinigungen kommerzieller Produkte problemlos bestimmen. Die Methode lässt sich auch an Polyalkylenglykolen durchführen, deren Endgruppen ganz oder teilweise funktionalisiert worden sind, oder die funktionalisierte Polyol-verunreinigungen enthalten, beispielsweise veretherte Hydroxyendgruppen. Die erfindungsgemäße Methode gestattet auch quantitative Bestimmungen von sehr geringen Mengen an Polyol-verunreinigungen, beispielsweise von Mengen von kleiner als 1 Gew. % davon.

Mit dem erfindungsgemäßen Verfahren lassen sich die Menge an Verunreinigungen in Polyalkylenglykolen quantitativ bestimmen. Dabei können die Verunreinigungen, die eine geringere Molmasse oder eine größere Molmasse wie das gewünschte Produkt aufweisen, bestimmt und/oder abgetrennt werden. Verunreinigungen, welche die gleiche Molmasse wie das gewünschte Produkt aufweisen können ebenfalls bestimmt und/oder abgetrennt werden, sofern die Molmasse nicht zu große Werte annimmt, beispielsweise Werte von mehr als 20000 g/mol.

Innerhalb gewisser Dispersitätsgrenzen, welche Vorrausetzung für die Anwendbarkeit der Polymere ist, ist eine Identifikation und quantitative Bestimmung der Verunreinigungen möglich. Die Identität der Verunreinigungen, beispielsweise des Diols, kann durch MALDI-MS Messungen untermauert werden.

Die Erfindung betrifft ein Verfahren zur Bestimmung von Verunreinigungen in Polyalkylenethern umfassend die Schritte
i) Einbringen von Polyalkylenethern als Analyt in eine Chromatographiesäule, die monolithisches Kieselgel als stationäre Phase enthält,
ii) Eluieren des Analyten mit einem flüssigen Elutionsmittel, das eine solche Polarität aufweist, dass der Analyt während der Chromatographie in adsorptivem Gleichgewicht mit der stationären Phase steht,
iii) Detektion der Komponenten des Analyten am austrittsseitigen Ende der Chromatographiesäule unter Erhalt eines Chromatogramms, welches unterschiedliche Komponenten des Analyten und deren qualitative Menge in Abhängigkeit von der Elutionszeit der einzelnen Komponenten ausweist, und
iv) Ermittlung von Banden im Chromatogramm, die eine geringe Höhe oder Fläche im Vergleich zur Bande mit der größten Höhe oder Fläche aufweisen, als Indiz für die Anwesenheit von Verunreinigungen im Analyten.

Bei den erfindungsgemäß eingesetzten Polyalkylenglykolen handelt es sich um mehrwertige Alkohole oder um die entsprechenden teilweise oder vollständig an den Endgruppen veretherten oder veresterten Derivate. Dabei bilden Hydroxylgruppen vorzugsweise die Endgruppen der Polymerketten.

Beispiele für erfindungsgemäß eingesetzte Polyalkylenglykole sind Polyethylenglykole, Polypropylglykole oder Polytetrahydrofurane. Beispiele hierfür sind: 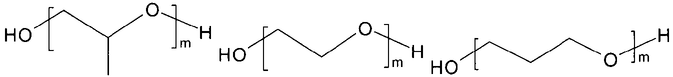 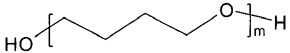 mit m ≥ 1. Weiterhin sind auch verzweigte Polyalkylenglykole mit mehreren Armen, beispielsweise mit 3, 4, 6 oder 8 Armen möglich.

Weitere bevorzugt eingesetzte Polyalkylenglykole sind solche, bei denen einige oder sämtliche Hydroxylendgruppen verethert sind, insbesondere Alkylethergruppen oder ganz besonders Methoxygruppen darstellen.

Besonders bevorzugt werden Polyethylenglykole im Molmassenbereich von 1000 bis 50000 g*mor⁻¹ engesetzt und insbesondere solche mit dem typischen pharmazeutisch relevanten Molmassenbereich von 1000 bis 20000 g*mol⁻¹. Die Molmasse wird für die Zwecke der vorliegenden Beschreibung durch Größenausschlußchromatographie bestimmt.

Bevorzugt werden Verfahren, bei denen der Polyalkylenether ein Polyethylenglykol oder ein Polypropylenglykol ist, der Hydroxylendgruppen aufweist, die teilweise oder vollständig verethert sein können.

Ebenfalls bevorzugt werden Verfahren, bei denen der Polyalkylenether ein Polyethylenglykol oder ein Polypropylenglykol ist, der Alkoxyendgruppen enthält, insbesondere Methoxyendgruppen.

Bei den zu analysierenden bzw. von den Polyalkylenglykolen abzutrennenden Verunreinigungen kann es sich ganz allgemein um organische Verbindungen handeln, wie z.B. um protische organische Verbindungen, deren protische Gruppen ganz oder teilweise funktionalisiert sein können. Typische Verunreinigungen sind Polyole, wie einwertige Alkohole oder Diole, deren Hydroxylgruppen teilweise oder vollständig verethert sein können, beispielsweise als Alkoxygruppen, insbesondere als Methoxygruppen vorliegen.

Die Menge der Verunreinigungen in der Ausgangsprobe beträgt in der Regel kleiner gleich 20 Gew. %, vorzugsweise weniger als 5 Gew. % und insbesondere weniger als 1 Gew. %, bezogen auf die Gesamtmenge der Ausgangsprobe.

Bevorzugt werden Verfahren, bei denen es sich bei den Verunreinigungen in den Polyalkylenethern um Polyole handelt, deren mittlere Molmasse im selben Bereich oder unterhalb der mittleren Molmasse der zu analysierenden Polyalkylenether liegt, vorzugsweise um Alkylendiole und/oder um Di- oder Trialkylenglykole.

Im Detail ist das erfindungsgemäße Verfahren durch die Etablierung von chromatographischen Bedingungen gekennzeichnet, die den Beginn des Adsorptionsregimes bedingen. Unter diesen Bedingungen setzt ein endgruppenspezifisches Adsorptionsverhalten ein. Bei der Chromatographie von Polymeren unterscheidet man drei modi operandi, die Größenausschlußchromatographe, die Elution unabhägig von der Kettenlänge und die Verteilungs- bzw. Adsorptionschromatographie, bei der eine Wechselwirkung des Eluenten mit der stationären Phase stattfindet. Das erfindungsgemäße Verfahren ist durch das Vorliegen von Bedingungen gekennzeichnet, bei denen eine Adsorptionschromatographie vorliegt.

Mit der vorliegenden Erfindung wird das inhärente Problem eines definierten Lösungsansatzes für die Problematik der Analyse von protischen und/oder Hydroxylgruppen enthaltenden Verunreinigungen behoben. Das erfindungsgemäße Verfahren bietet somit die Möglichkeit einer qualitativen und auch einer quantitative Bestimmung von Verunreinigungen in einem definierten Molmassenbereich vornehmen zu können. Insbesondere besteht die Möglichkeit, ohne chemische Modifikationen des Produktes auszukommen und eine Analyse innerhalb weniger Minuten vornehmen zu können.

Darüber hinaus ergeben sich Vorteile des erfindungsgemäßen Verfahrens aus der offensichtlichen Einfachheit der Bestimmung und aus dem rasch vorliegenden Ergebnis, das z.B. in wenigen Minuten erhalten werden kann.

Darüber hinaus können quantitative und reproduzierbare Reinheitsanalysen von Ansatz zu Ansatz innerhalb weniger Minuten durch schnelle Flüssigchromatographie vorgenommen werden.

Als stationäre Phase wird bei dem erfindungsgemäßen Verfahren ein monolithisches Kieselgel verwendet. Solche Produkte sind bekannt und werden bereits in anderen chromatographischen Verfahren eingesetzt.

Die erfindungsgemäß eingesetzten hochporösen Kieselsäure-basierten monolithischen Materialien sind durch eine makroporöse und miteinander verbundene Durchfluß-Porenstruktur gekennzeichnet, die von einem kontinuierlichen und dauerhaften Mesoporen-Skelett eingeschlossen ist. Solche stationären Phasen erweisen sich als hoch effizient und zeigen bei der Trennung von kleinen Analyten eine retentionsstabile Leistung.

Bevorzugt eingesetzte monolithische Kieselgele sind gekennzeichnet durch das Vorliegen eines kommunizierenden Netzwerkes von Poren, d.h. durch die konvektive und/oder diffusive Zugänglichkeit des Eluenten zu diesen Poren. Bevorzugte Größen der für den Eluenten konvektiv zugänglichen Poren bewegen sich im Bereich von 0,2 bis 3 µm. Daneben können die monolithischen Kieselgele noch Poren aufweisen, welche für den Eluenten durch Diffusion zugänglich sind. Die Größen dieser Poren bewegen sich vorzugsweise im Bereich von 3 bis 200 nm.

Bevorzugte monolithische Kieselgele sind an der Oberfläche einschließlich der inneren Oberfläche mit funktionellen Gruppen modifiziert. Dabei kann es sich um hydrophile Gruppen oder um hydrophobe Gruppen handeln. Beispiele für hydrophile Gruppen sind Hydroxylgruppen. Beispiele für hydrophobe Gruppen sind Alkylgruppen, beispielsweise Alkylgruppen mit 4-, 8-, 12- oder 18-Kohlenstoffatomen.

Alternativ kann das monolithische Kieselgel in unmodifizierter Form, d.h. als polares Material, eingesetzt werden.

Das monolithische Kieselgel kann also als polares Material oder aber auch in hydrophobisierter Form, d.h. als unpolares Material, eingesetzt werden.

Bevorzugt werden mit langen Alkylgruppen, z.B. mit C₁₈-Alkyl derivatisierte monolithische Kieselgelstäbe eingesetzt.

Im erfindungsgemäßen Verfahren wird ein Elutionsmittel mit einer solchen Polarität eingesetzt, dass der Analyt während der Chromatographie in adsorptivem Gleichgewicht mit der stationären Phase steht. Die Einstellung der Elutionsstärke kann beispielsweise durch Mischung von Lösungsmitteln unterschiedlicher Polarität erfolgen. Dabei wird eine solche Elutionsstärke eingestellt, bei der die Chromatographie als Adsorptions-/Verteilungschromatographie abläuft. Die Einstellung kann vom Fachmann durch Verdünnungsreihen mittels einfacher Reihenversuche vorgenommen werden.

Beim Einsatz von polarem monolithischen Kieselgel kommen Elutionsmittel mit geringer Polarität in Betracht. Beispiele dafür sind unpolare Lösungsmittel, die vorzugsweise wasserfrei sind. Als Elutionsmittel bevorzugt sind bei 25°C flüssige aliphatische oder aromatische Kohlenwasserstoffe, wie Hexan, Heptan, Octan, Decan, Benzol, Toluol oder Xylol, sowie bei 25°C flüssige halogenierte aliphatische Kohlenwasserstoffe, wie Dichlormethan, Chloroform oder Tetrachlormethan, oder bei 25 °C flüssige Carbonsäureester, wie Essigsäuremethylester oder Essigsäureethylester, oder bei 25 °C flüssige Ether, wie Diethylether, oder Kohlenstoffdisulfid. Diese Elutionsmittel können auch als Gemische eingesetzt werden, um die erforderliche Elutionsstärke einzustellen.

Unpolare Lösungsmittel können mit geringen Mengen an Wasser, Alkoholen oder aprotisch polaren Lösungsmitteln gemischt werden, um eine bestimmte Polarität des Elutionsmittels einzustellen.

Beim Einsatz von unpolarem monolithischen Kieselgel (entsprechend einer als Umkehrphase ausgebildeten stationären Phase) kommen Elutionsmittel mit hoher Polarität in Betracht.

Beispiele für polare Elutionsmittel sind Wasser, wasserlösliche Alkohole oder aprotische polare Lösungsmittel.

Beispiele für wasserlösliche Alkohole sind aliphatische Alkohole mit ein bis vier Kohlenstoffatomen.

Beispiele für aprotische polare Lösungsmittel sind Ketone, wie Aceton, Lactone, wie gamma-Butyrolacton, Lactame, wie N-Methyl-2-pyrrolidon, Nitrile, wie Acetonitril, Nitroverbindungen, wie Nitromethan, tertiäre Carbonsäureamide, wie Dimethylformamid oder Dimethylacetamid, Harnstoffderivate, wie Tetramethylharnstoff oder Dimethylpropylenharnstoff (DMPU), Sulfoxide, wie Dimethylsulfoxid (DMSO), Sulfone, wie Sulfolan, Kohlensäureester, wie Dimethylcarbonat oder Ethylencarbonat.

Besonders bevorzugt werden Mischungen von Wasser mit aprotischen polaren Lösungsmitteln eingesetzt. Beispiele für diese Gemische sind Gemische von Methanol und Wasser, von Ethanol und Wasser oder von Aceton und Wasser, oder insbesondere Mischungen von Wasser mit Acetonitril.

Die erforderliche Polarität des Elutionsmittels entsprechend einem Volumenverhältnis von Wasser zu aprotischem polaren Lösungsmittel, wie Wasser zu Acetonitril, von 6 : 4 ist ein ausgezeichneter Ausgangswert. Die Feineinstellung der Trennparameter erfolgt durch die oben angesprochenen Reihenversuche in infinitesimalen Schritten. Für das System Wasser/Acetonitril wird vorzugsweise das Volumenverhältnis von 6,5 : 3,5 bis 5,5 : 4,5 angestrebt.

Bevorzugt wird ein Verfahren, bei dem das monolithische Kieselgel als Umkehrphase ausgebildet ist und bei dem das Elutionsmittel Wasser und ein organisches Lösungsmittel in einer solchen Menge enthält, dass die Elution des Analyten als Adsorptions-/Verteilungschromatographie erfolgt.

Das erfindungsgemäße Verfahren kann bei Normaldruck oder vorzugsweise bei Überdruck durchgeführt werden. Vorzugsweise beträgt der Druck in der Chromatographiesäule 10 bis 200 bar.

Das erfindungsgemäße Verfahren wird bei solchen Temperaturen durchgeführt, bei denen das Elutionsmittel in der Säule flüssig ist. Vorzugsweise beträgt die Temperatur in der Chromatographiesäule 4 bis 50 °C.

Säulenlängen und Säulendurchmesser können in weiten Bereichen gewählt werden. Typische Säulenlängen bewegen sich im Bereich von 1 cm bis 1 m. Typische Säulendurchmesser bewegen sich im Bereich von 10 µm bis 10 cm.

Die Detektion der Komponenten des Analyten am austrittsseitigen Ende der Chromatographiesäule kann durch sämtliche dem Fachmann bekannte Methoden erfolgen. Beispiele dafür sind die Detektion von physikalischen Eigenschaften der mobilen Phase, wie der Lichtabsorption, der Fluoreszenz, der Lichtstreuung oder der Wärmeleitfähigkeit, oder die Detektion von chemischen Eigenschaften der mobilen Phase, wie dem Einsatz von Indikatorsubstanzen.

Bevorzugt werden Verfahren, bei denen die Detektion der Komponenten des Analyten am austrittsseitigen Ende der Chromatographiesäule durch Lichtstreudetektion (ELSD) oder durch UV/VIS-Spektroskopie erfolgt.

Das Resultat der Detektion der Komponenten des Analyten am austrittsseitigen Ende der Chromatographiesäule ist ein Chromatogramm, in dem Spezies der Probe mit verschiedenen Elutionszeiten in Abhängigkeit von der Zeit aufgetragen sind.

Aus der Höhe oder der Fläche der Banden des Chromatogramms lässt sich die qualitative Menge der betreffenden Komponente bestimmen. Durch den Einsatz entsprechender Kalibrierstandards lassen sich auch quantitative Bestimmungen durchführen.

Die Verunreinigungen in der Probe sind nur zu einem geringen Gehalt darin enthalten im Vergleich zu den Polymeren, welche den Hauptteil der Probe ausmachen.

Beim Auftreten von Banden im Chromatogramm, die eine geringe Höhe oder Fläche im Vergleich zur Bande mit der größten Höhe oder Fläche aufweisen kann gefolgert werden, dass Verunreinigungen in der Probe anwesend sind.

Bevorzugt ist ein Verfahren bei dem die Höhe der Banden mit geringer Höhe weniger als 10 %, insbesondere weniger als 5 % der Höhe der Bande mit der größten Höhe beträgt. Bei PEG-Diol ist beispielsweise der Nachweis bis zu einer Bandenhöhe von 0,8 % der Höhe der Bande mit der größten Höhe möglich.

Das erfindungsgemäße Verfahren kann ansatzweise oder kontinuierlich durchgeführt werden. Dazu können Standardappaturen der Chromatographie eingesetzt werden, beispielsweise herkömmliche HPLC Anlagen, die mit dem speziellen Säulenmaterial ausgerüstet sind.

Das erfindungsgemäße Verfahren eignet sich zur schnellen Prüfung von Polyalkylenglykolen auf Verunreinigungen. Es kann also vorteilhaft zur Qualitätskontrolle solcher Produkte eingesetzt werden.

Das erfindungsgemäße Verfahren läßt sich auch zur Abtrennung von Verunreinigungen aus Polyalkylenglykolen einsetzen. Es kann also auch vorteilhaft in der präparativen Aufreinigung dieser Verbindungen eingesetzt werden.

Diese Verwendungen sind ebenfalls Gegenstand der vorliegenden Erfindung.

Die nachfolgenden Beispiele erläutern die Erfindung ohne diese zu begrenzen.

### Beispiele

Mit einem Chromatographiesystem (Agilent Technologies 1200 Series, Polymer Standards Service GmbH (PSS, Mainz)) wurden chromatographische Messungen durchgeführt. Das System bestand aus einem Säulenofen und einem Lichtstreudetektor (ELSD), der mit Stickstoff als Trägergas betrieben wurde. Messungen wurden an kommerziell erhältlichen Polyethylenglykoldiolen (PEG-Diole; PSS, Mainz, Deutschland und PL, Shropshire, UK) und an synthetisierten Polyethylenglykolmonomethylethern (mPEG) durchgeführt. Dabei wurde eine hochauflösende Chromolith-Säule verwendet (monolithisches Kieselsäuregel mit RP-18 endgruppenverkappt). Die Chromolith-Säule wurde von Merck KGaA (Darmstadt, Deutschland) erhalten. Die Länge der Säule betrug 100 mm und deren Innendurchmesser betrug 4,6 mm. Das Säulenmaterial verfügte über eine hohe Porosität von mehr als 80% und wies Makroporen von etwa 1,1 µm Größe und Mesoporen der Größe von etwa 15 nm auf. Die innere Oberfläche des Säulenmaterials betrug 250 m² g⁻¹. Die innere Oberfläche wurde durch Quecksilberporosimetrie bzw. durch Stickstoff Adsorptions-/Desorptionsisothermen ermittelt.

Molmassen (Zahlenmittel Mₙ und Gewichtsmittel M_{w}) der synthetisierten mPEG-Proben wurden durch Größenausschlußchromatographie bestimmt und zeigten schmale Dispersitäten (Ð ≤ 1,1). Einzelheiten finden sich in der folgenden Tabelle 1.

**Tabelle 1: Übersicht über die Eigenschaften der verwendeten Polyethylenglykoldiole (PEG) und Polyethylenglykolmonomethylether (mPEG)**

| Produkt | Mₙ (g mol⁻¹) | M_{w} (g mol⁻¹) | Ð |
|---|---|---|---|
| PEG 1 | 375 | 400 | 1,07 |
| PEG 2 | 1840 | 2010 | 1,09 |
| PEG 3 | 2800 | 3060 | 1,09 |
| PEG 4 | 7500 | 11200 | 1,51 |
| PEG 5 | 22100 | 25800 | 1,17 |
| PEG 6 | 34000 | 42700 | 1,26 |
| mPEG 1 | 2300 | 2400 | 1,04 |
| mPEG 2 | 5600 | 5800 | 1,04 |
| mPEG 3 | 7500 | 7700 | 1,03 |
| mPEG 4 | 120000 | 13200 | 1,10 |
| mPEG 5 | 21800 | 22700 | 1,04 |
| mPEG 6 | 34900 | 37200 | 1,07 |
| mPEG 7 | 46200 | 50100 | 1,08 |

### Chemikalien und Materialien

Die eingesetzten Reagenzien und Lösungsmittel waren kommerziell erhältliche Produkte, die von Aldrich oder von Linde erworben wurden. Ethylenoxid (EO) wurde vor der Destillation in Büretten über Natrium gerührt. Vor ihrem Einsatz wurden 2-Methoxyethanol und Diphenylmethan über Calciumhydrid gerührt und dann unter Vakuum destilliert. Die gereinigten Reaktanden wurden mit Argon gespült, in Schlenkrohren in einem Handschuhkasten gelagert und innerhalb von drei Tagen verwendet. Tetrahydrofuran wurde durch Erhitzen unter Rückfluß über frisch zubereiteten Natriumbenzophenon getrocknet, bis sich eine tiefblaue Farbe zeigte. Das getrocknete Tetrahydrofuran wurde nachträglich in einem Schlenkrohr unter Inertgas gelagert und innerhalb kurzer Zeit verwendet.

Acetonitril vom HPLC-Gütegrad wurde von Sigma (Taufkirchen, Deutschland) erworben und ultrareines Wasser wurde in einem Thermo Scientific^{™} Barnstaedt^{™} GenPure^{™}-xCAD Wasserreinigungssystem (Thermo Electron LED GmbH, Langenselbold, Deutschland) frisch bereitet. Die verwendeten Methoxypolyethylenglykolproben (mPEG-Proben) wurden synthetisiert. Die PEG-Proben wurden als SEC-Standards von PSS (Polymer Standards Service GmbH, Mainz, Deutschland) und von PL (Polymer Laboratories, Shropshire, Vereinigtes Königreich) erworben.

### Herstellung von mPEG-Proben

Die Herstellung des Initiators Kalium-2-methoxyethanolat erfolgte unter inerten Bedingungen. 2-Methoxyethanol wurde in Tetrahydrofuran gelöst und Diphenylmethyl-Kalium wurde tropfenweise hinzugefügt, bis ein Niederschlag des Produkts beobachtet werden konnte und eine leichte orangefarbene Mischung entstanden war. Das Produkt wurde viermal mit Tetrahydrofuran gewaschen, bis die orange Farbe vollständig verschwunden war. Danach wurde das Produkt unter Vakuum getrocknet und fiel als graues Pulver an.

Die Herstellung der Initiatorlösungen für die Polymerisation von EO zu mPEG durch die lebende anionische Ringöffnungspolymerisation (AROP) wurde unter Ausschluß von Wasser und Luft (inert) durchgeführt. Zuerst wurden Tetrahydrofuran und Kalium-2-methoxyethanolat unter inerten Bedingungen in eine GL45 Flasche gegeben. Um das gesamte Verfahren unter inerten Bedingungen durchführen zu können, wurde die feine Suspension dann über PTFE-Schläuche in einen PicoClave Glasautoklavreaktor transferiert (BüchiGlasUster, Uster, Schweiz) und unter Rühren auf -20 °C gekühlt. Danach wurde die entsprechende Menge an EO der Reaktionsmischung unter Einsatz einer Mini-CORI-FLOW Masseflußkontroll-Apparatur (Bronkhorst High-Tech B.B., Ruurlo, Niederlande) hinzugefügt, wobei anschließend innerhalb von 120 min auf 45 °C erhitzt wurde und für weitere 48 Stunden gerührt wurde. Durch Zugabe einer Mischung aus Ethanol/Essigsäure (95/5 %, v/v) wurde die Polymerisation abgebrochen. Zur Isolierung und Reinigung wurde das Polymer in kaltem Diethylether filtriert und unter Vakuum getrocknet. Das Produkt fiel als weißes Pulver an.

### Bestimmung der Molmasse der synthetisierten mPEG-Proben

Es wurden größenausschlusschromatographische Messungen (SEC) an einem Shimadzu SEC-System durchgeführt (Steuereinheit: CBM-20A VP, Entgaser: DGU-20A5, Pumpe: LC-10ADVP, automatischer Probenehmer: SIL-10AD VP, Ofen: TechLab, RI-Detektor: RID-10A), das mit einer ternären mobilen Phase bestehend aus Chloroform/Isopropanol/Triethylamin (94/2/4 %, v/v/v) als Elutionsmittel betrieben wurde. Die PS5 SDV lineare S Säule (5 µm Teilchengröße) wurde mit einem Volumenstrom von 1 mL min⁻¹ bei einer Temperatur von 40 °C betrieben. Das System wurde im Bereich von 194 g mol⁻¹ bis 106000 g mol⁻¹ unter Verwendung eines PEG/PEO-Standards kalibriert, der von (i) Polymer Standards Service GmbH (PSS, Mainz, Deutschland) (PEO 106000, 55800, 42700, 26100 g mol⁻¹) und von (ii) Polymer Laboratories (PL, Shropshire, UK) (PEG 12600, 7100, 4100, 1470, 960, 600, 440, 194 g mol⁻¹ erhalten wurde.

### Flüssigchromatographie

Chromatographische Messungen wurden mit einem modifizierten System der Agilent Technologies 1200 Serie von PSS (Polymer Standards Service GmbH, Mainz) durchgeführt. Totvolumina der Säule wurden durch Verwendung von 130 µm ID-Schlauch verringert, der vom Injektor zum Säulenkopf und vom Säulenauslaß zum Detektor verlief. Das Injektionsvolumen wurde in allen Versuchen auf 10 µl eingestellt, d.h. auf 0,6% des Säulenvolumes. Die Säule war in einem TCC 6000-Säulenofen von PSS (Polymer Standards Service GmbH, Mainz) untergebracht und wurde bei 30 °C getempert. Ein Lichtstreudetektor (ELSD) (Softa Model 400) von PSS (Polymer Standards Service GmbH, Mainz) wurde mit der Auslaßleitung der Säule verbunden. Für den ELSD-Detektor wurde Stickstoff als Trägergas verwendet. Die Temperatur der Kammer und des Driftrohres wurden auf 45 bzw. 70 °C eingestellt. Der Detektor wurde mit der maximalen Datenrate von 10 Hz betrieben. Elutionen wurden auf einer hochauflösenden Chromolithsäule durchgeführt (monolithisches Kieselsäuregel mit RP-18 endgruppenverkappt). Die Chromolith-säule wurde von Merck KGaA (Darmstadt, Deutschland) erhalten. Die Säulenlänge betrug 100 mm bei einem Durchmesser von 4,6 mm. Das gesamte Totvolumen des Systems wurde ermittelt, indem die Säule durch einen Schlauchverbinder mit einem Totvolumen von Null ersetzt wurde und die kleinste und die größte PEG-Probe injiziert wurde. Es wurde berechnet, dass das Totvolumen ungefähr 2% des gesamten Säulenvolumens betrug.

Alle Proben wurden in Konzentrationen zwischen 0,1 und 2,0 mg mL⁻¹ bereitgestellt, indem diese in der jeweiligen für die Chromatographieexperimente verwendeten mobilen Phase gelöst wurden. Vor der Analyse wurden Proben über einen PTFE-Filter mit 0,45 µm Porengröße filtriert.

### Experimente der Matrix-Assistierten Laser-Desorption-Ionosierung Flugzeit-Massenspektroskopie (MALDI-TOF-MS)

An den gesammelten Elutionsfraktionen wurden MALDI-TOF-MS Experimente unter Verwendung eines UltraFlex TOF/TOF Massenspektrometers (Bruker Daltonics, Bremen, Deutschland) durchgeführt, das mit einem Nd-YAG Laser ausgerüstet war. Alle Spektren wurden im positiven Reflektormodus gemessen. Das Instrument wurde vor jeder Messung mit einem externen PMMA-Standard von PSS (Polymer Standards Services GmbH, Mainz) im geforderten Massenmessbereich kalibriert. MS-Daten wurden mit der Software Flex Analysis 3,4 analysiert und Isotopenmuster wurden mit einer Software (Isotope Pattern Calculator von Bruker Daltonics) generiert. Für die Probenvorbereitung der MALDI-MS-Proben wurden die gesammelten Elutionsfraktionen, eine Lösung von trans-2-[3-(4-tert-Butylphenyl)-2-methyl-2-propenyliden]malonsäuredinitril (DCTB, Sigma-Aldrich) in Chloroform in einer Konzentration von 30 mg mL⁻¹ und das Dotiersalz Natriumiodid gelöst in Chloroform in einer Konzentration von 60 mg mL⁻¹ verwendet. Die Elutionsfraktion mit der Probe wurde zuerst auf dem Probenteller platziert und die Probe wurde dann trocknen gelassen. Nach dem Trocknen wurde die Lösungen der Matrix und des Salzes auf die entsprechende Stelle auf dem Probenteller appliziert. Für jede Probe wurde 0,5 µl der Probenlösung verwendet, gefolgt von 0,5 µl der Matrix-Salzgemisch-Lösungen.

### Beispiel 1: Bestimmung von Elutionszeiten in Abhängigkeit von der Zusammensetzung des Eluenten.

In der Abbildungen 1 a) und 1 b) werden Elutionszeiten für verschiedene mPEG-Proben (geschlossene Symbole) und PEG-Diolproben (offene Symbole) in Abhängigkeit von der Zusammensetzung des Eluenten dargestellt. Mischungen von Acetonitril mit Wasser wurden als Eluent eingesetzt.

Abbildung 1a) zeigt die Ergebnisse für mPEG-Proben mit unterschiedlichen Molmassen (Mₙ = 2300 g/mol; Mₙ = 5600 g/mol; Mₙ = 7500 g/mol; Mₙ = 12000 g/mol; Mₙ = 21800 g/mol; Mₙ = 34900 g/mol; Mₙ = 46200 g/mol).

Abbildung 1b) zeigt die Ergebnisse für PEG-Diolproben mit unterschiedlichen Molmassen (Mₙ = 1840 g/mol; Mₙ = 2800 g/mol; Mₙ = 7500 g/mol; Mₙ = 22100 g/mol; Mₙ = 34000 g/mol).

Abbildung 2 zeigt Ergebnisse der Gradientenelution einer PEG-Diolprobe, einer mPEG-Probe und einer Mischung aus beiden Proben. Die obere Kurve zeigt die Elution einer PEG-Diolprobe mit einer mittleren Molmasse Mₙ = 1840 g/mol. Die mittlere Kurve zeigt die Elution einer mPEG-Probe mit einer mittleren Molmasse Mₙ = 2300 g/mol und die untere Kurve zeigt die Elution einer 50/50 (%, v/v) Mischung dieser beiden Proben.

Bedingungen: Binäre Zusammensetzung der mobilen Phase mit 10 % Acetonitril in Wasser die 3 Minuten lang isokratisch gehalten wurde und anschließend innerhalb von 50 Minuten linear bis zu einem Gehalt von 50 % Acetonitril in Wasser gesteigert wurde (%, v/v)
Abbildung 3 zeigt die Elugramme einer mPEG-Probe des mittleren Molgewichts von Mₙ = 12 000 g/mol (mittlere Kurve) und von 50/50 (%, v/v) Mischungen dieser mPEG-Probe mit PEG-Diol des mittleren Molgewichts Mₙ = 2800 g/mol (obere Kurve) oder mit PEG-Diol des mittleren Molgewichts Mₙ = 22100 g/mol (untere Kurve). Die Zusammensetzung der mobilen Phase aus Wasser/Acetonitril betrug 60/40 (%, v/v). Die Fließgeschwindigkeit der mobilen Phase betrug 1 mL/min.

Abbildung 4 a) zeigt die Elugramme von Mischungen von m-PEG mit unterschiedlichen Gehalten an PEG-Diol. Der Gehalt von mPEG der mittleren Molmasse von Mₙ = 2300 g/mol wurde bei 1 mg/mL konstant gehalten und zunehmende Gehalte an PEG-Diol der mittleren Molmasse von Mₙ = 1840 g/mol wurden eingesetzt.

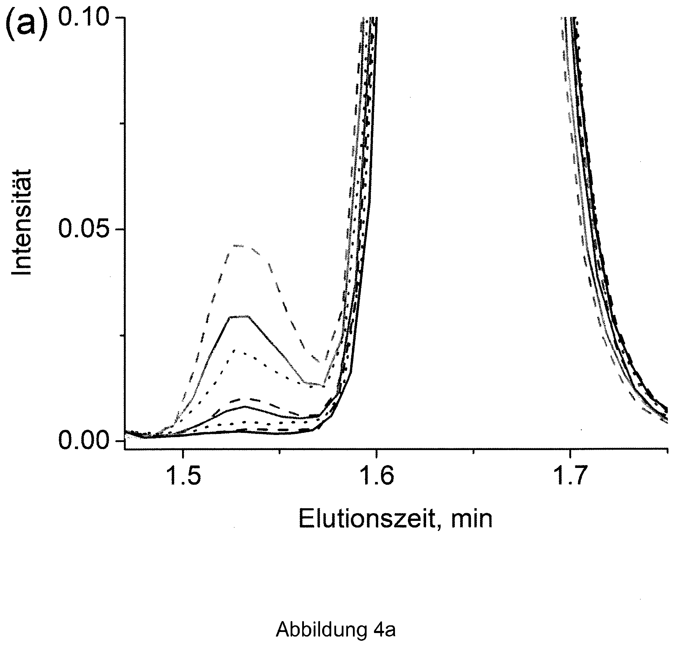

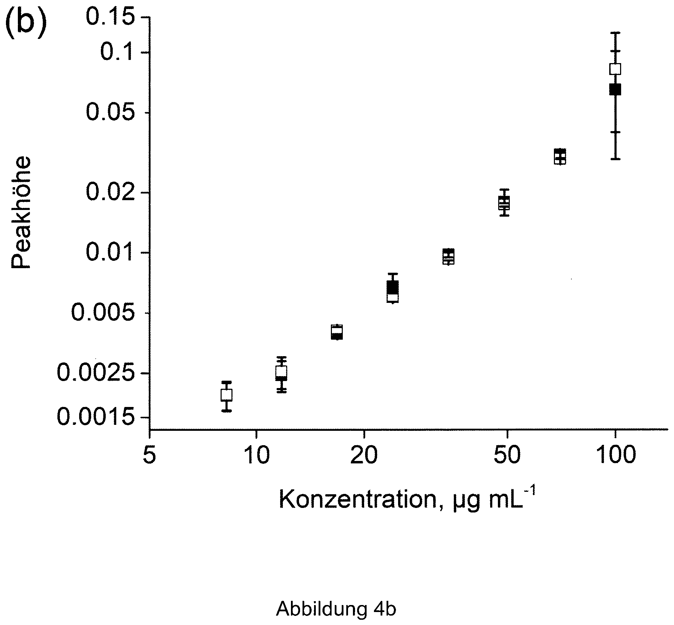

Abbildung 4 b) zeigt eine doppelt-logarithmische Auftragung der Bandenhöhe des Elutionssignals in Relation zum Gehalt an PEG-Diol in der Mischung (mit Fehlerbalken erhalten von einer jeweils dreimal wiederholten Injektion und chromatographischen Analyse). Die Messungen wurden am nächsten Tag mit den gleichen Proben wiederholt (offene Symbole).

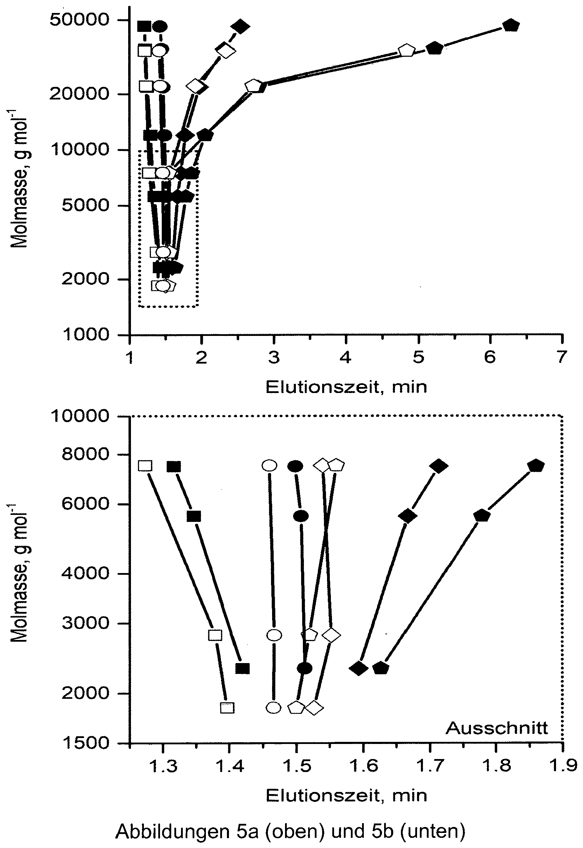

Abbildungen 5a und 5b zeigen die Ergebnisse der Elution von mPEG und von PEG-Diolen. Die mitteleren Molmassen Mₙ der eingesetzten mPEG und der PEG-Diole bewegen sich im Bereich von 1500 bis 50000 g/mol. Die obere Abbildung zeigt Ergebnisse, die unter Verwendung von 50/50 bis 40/60 Acetonitril/Wasser (%, v/v) als Elutionsmittel erhalten wurden. Die untere Abbildung zeigt einen deutlich vergößerten Ausschnitt der Abbildung 5a.

In der oberen Abbildung 5a sind die Molmassen (Mₙ) von PEG-Diolen (offene Symbole) und von mPEG (geschlossene Symbole) gegen die Elutionszeit bei 50/50 Acetonitril/Wasser (%, v/v) aufgetragen, wodurch der Übergang zwischen Größenausschluß-Modus (Quadrate) und Adsorptions-/Verteilungsmodus (Diamanten und Fünfecke) angezeigt wird. Letzterer wird zuerst für die größeren Molmassen erreicht. Das untere Diagramm 5b mit einer geringeren Konzentration an Acetonitril als Elutionsmittel zeigt, dass beim Gehalt von 40 % Acetonitril im Elutionsmittel die mPEG mit geringerer Molmasse signifikant später als die PEG-Diole eluieren. Die Zusammensetzung der mobilen Phase betrug 40/60 Acetontril/Wasser (%, v/v). Die Fließgeschwindigkeit der mobilen Phase betrug für beide Abbildungen 5a und 5b 1 mL min⁻¹.

Aus Abbildungen 5a und 5b wird klar, dass eine Zusammensetzung der mobilen Phase von 50/50 Acetonitril-/Wasser (%, v/v) zu Elutionsmustern führt, die von Größen-Ausschlußeffekten beeinflusst werden, d.h. die größten mPEG und PEG-Diole eluieren zuerst. Zunahme der Polarität des Elutionsmittels der mobilen Phase auf 42% Acetonitril zeigt erhöhte Elutionszeiten für die PEG mit größeren molaren Massen, so dass alle PEG zu ähnlichen Elutionszeiten eluieren, mit praktisch keiner Selektivität (Kreise) über sämtliche molaren Massen. Diese Ergebnisse zeigen die begrenzte Fähigkeit der Flüssigchromatographie unter kritischen Bedingungen (LCCC-Elutionsmodus), zwischen mPEG und PEG-Diol differenzieren zu können, da der Unterschied zwischen alpha-Hydroxyl im Vergleich zu alpha-Methoxy einfach zu gering ist, um klare kritische Adsorptionsbedingungen zu ermöglichen, die auf dem Endgruppencharakter basieren (Abb. 1).

Bei Elutionsmitteln enthaltend nur 40 bis 41 % Acetonitril eluieren größere PEG bedeutend später als die kleineren, d.h. bei molaren Massen von mehr als 10000 g mol⁻¹ (Diamanten und Fünfecke in Abb. 5a) wird in die Verteilung/Adsorption des Polymergerüsts eingetreten, d.h. bei Molmassen oberhalb von 10000 g mol⁻¹ wird deutlich hervortretend in den Verteilungs-/Adsorptionsmodus eingetreten (Diamanten und Fünfecke im oberen Teil von Abbildung 5a). Oberhalb von 10000 g mol⁻¹ wird das Ergebnis ausschließlich nur durch die von der Molmasse abhängige Adsorption/- Verteilung des Polymergerüsts bestimmt mit einem allmählich abnehmenden Beitrag, der von der Identität der alpha-Gruppen herrührt. Das wird im unteren Teil der Abb. 5a gezeigt, der die kleineren Molmassen betrifft (< 10000 g mol-1, Fünfecke).

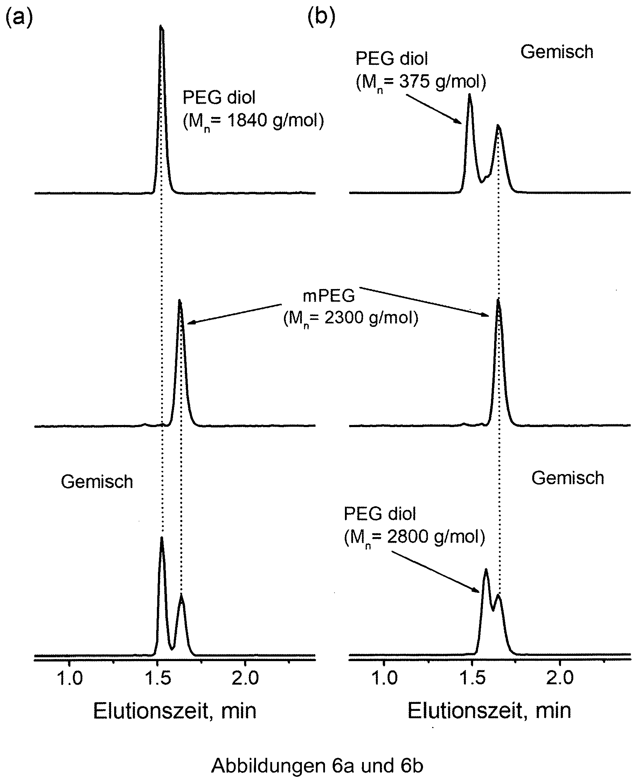

An dieser Stelle beginnen Verteilung und Adsorption die Elution zu dominieren. Ebenfalls hervorzuheben ist, dass bei den Elutionszeiten für die Populationen der Spezies der mPEG und der PEG-Diole sich kleine, aber spürbare Unterschiede in der Elutionszeit zu entwickeln beginnen. Abbildungen 5a und 5b beschreiben also eine einzigartige Möglichkeit der Trennung von mPEG-und PEG-Diol Spezies mit sehr ähnlichen Molmassen, d.h. eine Separation im Verteilungs-/Adsorptionsmodus bei einem Acetonnitrilgehalt von 40%. Während PEG-Diole zwischen 1000 und 10000 g mol⁻¹ immer noch ziemlich ähnlich eluieren, zeigen mPEG eine verzögerte Elution (Fünfecke in Abb. 5a und 5b). Dieses wird z.B. nachstehend an Trennungen von Mischungen eines mPEG/PEG-Diolpaares mit ähnlichen Molmassen demonstriert (Abbildung 6a).

In Abbildung 6a werden Elugramme von PEG-Diol (Mₙ = 1840 g mol⁻¹, obere Spur), von mPEG (Mₙ = 2300 g mol⁻¹, mittlere Spur) und von deren Mischung 50/50 (%, v/v} (untere Spur) gezeigt.

In Abbildung 6b werden Elugramme von mPEG (Mₙ = 2300 g mol⁻¹, mittlere Spur), von Gemischen dieses m-PEG mit PEG-Diol (Mₙ = 375 g mol⁻¹, obere Spur) und von Gemischen dieses m-PEG mit PEG-Diol (Mₙ = 2800 g mol⁻¹, untere Spur) gezeigt.

Bei den in Abbildungen 6a und 6b dargestellten Versuchen betrug die Fließgeschwindigkeit der mobilen Phase 1 mL min⁻¹ und die mobile Phase wies eine Zusammensetung von 60/40 Wasser/Acetonitril (%, v/v) auf.

Diese Ergebnisse zeigen, dass das mPEG des Beispiels der Abbildung 6a als schmale Bande eluiert, die sich von derjenigen eines PEG-Diols mit ähnlicher Molmasse unterscheidet. Größere mPEG mit Molmassen von 20000 g mol⁻¹ eluieren ähnlich wie Modelldiole mit vergleichbarer Molmasse (Abb. 1). Diese Situation ist nicht überraschend und rührt von einer verloren gegangenen Selektivität in Bezug auf den Endgruppencharakter bei Molmassen von größer als 20000 g mol⁻¹ her, wobei die Adsorption der Polymerkette die Elution stark dominiert.

Es wird festgestellt, dass bei Verwendung eines Diols mit deutlich unterschiedlicher Molmasse und Molmassenverteilung eine Trennung von mPEG und PEG-Diol auch bei größeren Molmassen möglich ist.

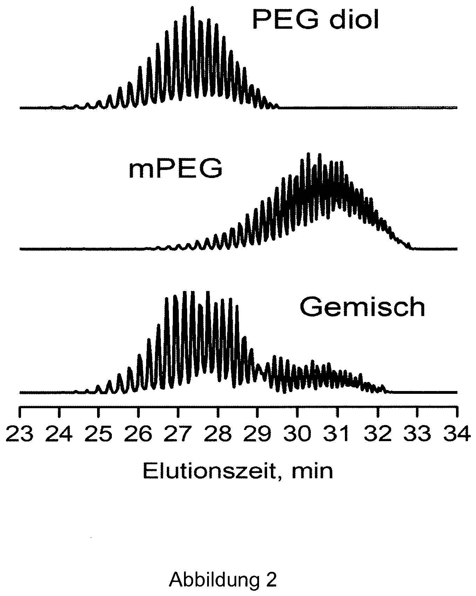

Zur Untermauerung der ausgeprägten Selektivität zwischen mPEG und PEG-Diol wurde das in Abb. 6a und 6b eingesetzte mPEG mittels Gradienten-Flüssigkeitschromatographie analysiert (Abb. 2). Die Experimente zeigten die erwartete Dispersität der PEG-Standards und der mPEG-Proben durch das Auftreten einer Vielzahl von Banden sowohl beim PEG-Diol als auch bei der mPEG-Probe. Die Gradienten-Elution verbessert nicht die Unterscheidbarkeit zwischen mPEG und PEG-Diol (Abb. 2).

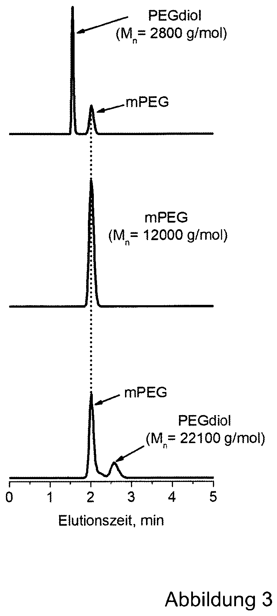

Infolge unterschiedlicher Initiationsszenarien und der Reaktionskinetiken sowie der Durchführung der Polymerisation ist es unwahrscheinlich, dass PEG-Diolverunreinigungen dieselben Molmassen-Werte wie die mPEG-Proben haben. Die unterschiedlichen Initiierungswahrscheinlichkeiten und Kinetiken der wachsenden Polymerketten mit zwei möglichen Anknüpfungspunkten für Monomere benötigen Beachtung. Es ist daher ein Nachweis wünschenswert, ob kleinere und insbesondere größere Mengen an PEG-Diolverunreinigungen in mPEG-Produkten vorhanden sind. Um solche Bedingungen zu imitieren wurden mPEG-Proben untersucht, die am unteren und am oberen Ende des Molmassenbereichs einen kontrollierten Gehalt von PEG-Diol mit geringerer bzw. mit größerer Molmasse enthielten. Ausgewählte Elugramme sind in den Abbildungen 6b und 3 dargestellt.

Es ist klar, dass Diole mit kleinerer Molmasse sich deutlich von dem jeweiligen mPEG unterscheiden (Abbildungen 6b und 3, oberste Spuren), jedoch bei größerer Molmasse des Diols zunehmend schwieriger zu identifizieren sind (Abbildungen 6b und 3, unterste Spur), obwohl man zwei Spezies in den Elugrammen erkennen kann. Das Beispiel für das PEG-Diol mit der größeren Molmasse (Abbildung 3, unterste Spur) eluiert in zwei unterscheidbaren Fraktionen die aus einer bimodalen Verteilung der Molmasse stammen. Diese eluieren jedoch später als die Fraktion des mPEG. Das ist ein inhärentes Ergebnis der Elution der PEG-Diole, die auf der Adsorption/- Verteilung der Polymerketten der Makromoleküle mit größerer Molmasse basiert (Abbildung 5). Die kleinere Elutionsfraktion zeigt auch einige Überlappung mit der Fraktion des mPEG. Ungeachtet und im Gegensatz zum reinen mPEG (Abbildungen 6a und 6b, mittlere Spur) wird das PEG-Diol wie in den Chromatogrammen dargestellt durch ein klares Elutionsmuster angezeigt (Abb.S3, unterste Spur gegenüber der mittleren Spur).

Zur Darstellung der grundsätzlichen Eignung der Methode für die Abschätzung einer Menge an vorhandenen PEG-Diole wurden Experimente mit Gemischen aus unterschiedlichen Konzentrationen von PEG-Diol (Mₙ = 1840 g mol⁻¹) mit einer festen Konzentration von mPEG (Mₙ = 2300 g mol⁻¹) durchgeführt (Abbildung 4a).

Obwohl die typische nichtlineare Abhängigkeit des ELSD selbst bei der doppelt logarithmischer Auftragung der Bandenhöhe gegen die Konzentration der Lösung offensichtlich ist (Abbildung 4), gestattet die Wiederholbarkeit der Messungen an verschiedenen Tagen eine Abschätzung der Konzentrationen und des Gehalts von PEG-Diolen von kleiner als 1% bei einer festen Konzentration von mPEG 1 mg mL⁻¹ (Abbildung 4).

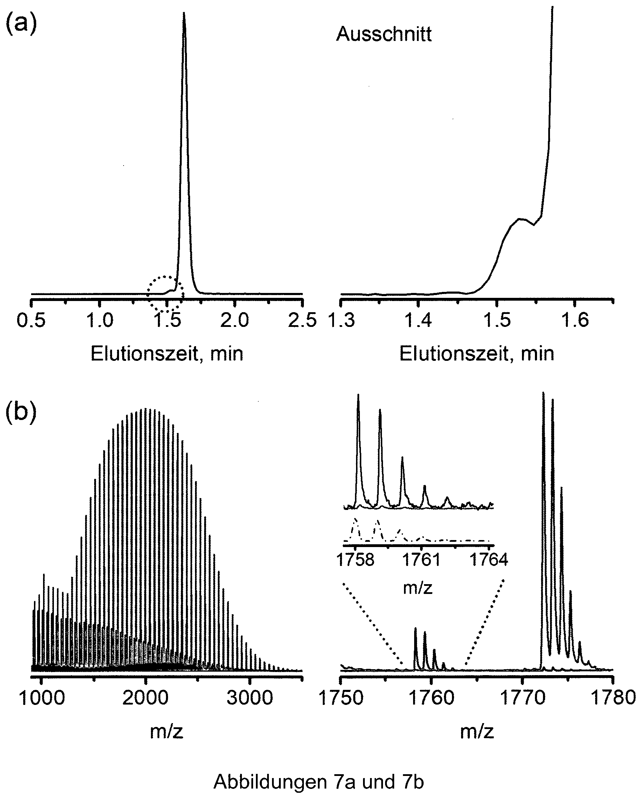

Zur Demonstration der Leistungsmöglichkeit der Methode des hier beschriebenen Ansatzes wurde eine Probe von mPEG analysiert, die in Gegenwart einer protischen Verunreinigung, z.B. von Wasser, hergestellt worden war. Das Wasser war zu Beginn der lebenden anionischen Ringöffnungspolymerisation hinzugefügt worden. In diesem Fall wird eine Diolverunreinigung durch eine deutliche Schulter in der Bande im Chromatogramm angezeigt (Abbildung 7a).

In Abbildung 7a wird ein Anwendungsbeispiel für das beschriebene Verfahren gezeigt. Es wurden dieselben chromatographischen Bedingungen wie in Abbildung 6 beschrieben verwendet.

Abbildung 7a zeigt die Elutionsspur von 1 mg mL⁻¹ eines Produktes der anionischen Polymerisation, das eine Diolverunreinigung enthält. Bei der Darstellung auf der rechten Seite von Abbildung 7a handelt es sich um eine Vergrößerung der Bande auf der linken Seite dieser Abbildung.

Abbildung 7b zeigt in der linken Hälfte MALDI-TOF-MS-Spektren der gesammelten kleinen Elutionsfraktion, die als PEG-Diol identifiziert worden ist (dargestellt in schwarz) und der größeren Elutionsfraktion, die als mPEG identifiziert worden ist (dargestellt in grau). In der rechten Hälfte von Abbildung 7b wird das Isotopen-Fragmentationsmuster des PEG-Diol und des mPEG dargestellt. Es ist ein Ausschnitt aus dem Massenspektrum dargestellt, wobei die gestrichelte Linie das berechnete Isotopen-Fragmentierungsmuster für PEG-Diole ist.

Die aus dem Chromatogramm gesammelte Elutionsfraktion (Abbildung 7a) wurde durch Einsatz von MALDI-TOF-MS als PEG-Diol Verunreinigung mit einer breiten Molmassenverteilung von weniger als 1000 m/z bis zu 3000 m/z identifiziert (Abbildung 7b, linker Teil, schwarzes Massenspektrum). Die Menge an PEG-Diol wurde mit etwa 8 % eingeschätzt.

Aus den Daten dieser Beispiele kann abgeleitet werden, dass bei experimentellen Bedingungen, welche nicht zu einer selektiven Elution von Spezies führen, die auf einer Verteilung der Molmasse beruhen (z.B. Abbildung 3), sondern die Populationen von mPEG und PEG-Diolen in ziemlich schmalen Elutionsbanden auftreten (z.B. Abbildung 3), eine schnelle Identifikation von PEG-Diolverunreinigungen in mPEG in dem pharmazeutischen-relevanten molaren Bereich möglich ist (z.B. Abbildung 5).

## Patentansprüche

1. Verfahren zur Bestimmung von Verunreinigungen in Polyalkylenethern umfassend die Schritte
i) Einbringen von Polyalkylenethern als Analyt in eine Chromatographiesäule, die monolithisches Kieselgel als stationäre Phase enthält,
ii) Eluieren des Analyten mit einem flüssigen Elutionsmittel, das eine solche Polarität aufweist, dass der Analyt während der Chromatographie in adsorptivem Gleichgewicht mit der stationären Phase steht,
iii) Detektion der Komponenten des Analyten am austrittsseitigen Ende der Chromatographiesäule unter Erhalt eines Chromatogramms, welches unterschiedliche Komponenten des Analyten und deren qualitative Menge in Abhängigkeit von der Elutionszeit der einzelnen Komponenten ausweist, und
iv) Ermittlung von Banden im Chromatogramm, die eine geringe Höhe oder Fläche im Vergleich zur Bande mit der größten Höhe oder Fläche aufweisen, als Indiz für die Anwesenheit von Verunreinigungen im Analyten.

2. Verfahren nach Anspruch 1, **dadurch gekennzeichnet, dass** der Polyalkylenether ein Polyethylenglykol oder ein Polypropylenglykol ist, der Hydroxylendgruppen aufweist, die teilweise oder vollständig verethert sein können.

3. Verfahren nach Anspruch 2, **dadurch gekennzeichnet, dass** der Polyalkylenether ein Polyethylenglykol oder ein Polypropylenglykol ist, der Alkoxyendgruppen enthält, insbesondere Methoxyendgruppen.

4. Verfahren nach mindestens einem der Ansprüche 1 bis 3, **dadurch gekennzeichnet, dass** es sich bei den Verunreinigungen in den Polyalkylenethern um Polyole handelt, deren mittlere Molmasse im selben Bereich oder unterhalb der mittleren Molmasse der zu analysierenden Polyalkylenether liegt, vorzugsweise um Alkylendiole und/oder um Di- oder Trialkylenglykole.

5. Verfahren nach mindestens einem der Ansprüche 1 bis 4, **dadurch gekennzeichnet, dass** das monolithische Kieselgel als Umkehrphase ausgebildet ist und dass das Elutionsmittel Wasser und ein organisches Lösungsmittel in einer solchen Menge enthält, dass die Elution des Analyten als Adsorptionschromatographie stattfindet.

6. Verfahren nach Anspruch 5, **dadurch gekennzeichnet, dass** das Elutionsmittel Wasser und Acetonitril enthält.

7. Verfahren nach mindestens einem der Ansprüche 1 bis 6, **dadurch gekennzeichnet, dass** es sich bei dem chromatographischen Verfahren um eine Hochdruck-Flüssigkeitschromatographie handelt.

8. Verfahren nach mindestens einem der Ansprüche 1 bis 7, **dadurch gekennzeichnet, dass** die Detektion der Komponenten des Analyten am austrittsseitigen Ende der Chromatographiesäule durch Lichtstreudetektion (ELSD) oder durch UV/VIS-Spektroskopie erfolgt.

9. Verfahren nach mindestens einem der Ansprüche 1 bis 8, **dadurch gekennzeichnet, dass** die Höhe der Banden mit geringer Höhe weniger als 10 %, insbesondere weniger als 5 % der Höhe der Bande mit der größten Höhe beträgt.

10. Verwendung des Verfahrens nach mindestens einem der Ansprüche 1 bis 9 zur Qualitätskontrolle von Polyalkylenglykolen oder zur präparativen Aufreinigung von Polyalkylenglykolen.

## Claims

1. A method for the determination of impurities in polyalkylene ethers comprising the steps of
i) introducing polyalkylene ethers as analyte into a chromatography column containing monolithic silica gel as stationary phase
ii) eluting the analyte with a liquid eluent having a polarity such that the analyte is in adsorptive equilibrium with the stationary phase during chromatography,
iii) detecting the components of the analyte at the outlet end of the chromatography column to obtain a chromatogram which shows different components of the analyte and their qualitative quantity as a function of the elution time of the individual components, and
iv) determining bands in the chromatogram which have a small height or area compared to the band with the largest height or area as an indication of the presence of impurities in the analyte.

2. The method according to claim 1, **characterized in that** the polyalkylene ether is a polyethylene glycol or a polypropylene glycol which has hydroxyl end groups which can be partially or completely etherified.

3. The method according to claim 2, **characterized in that** the polyalkylene ether is a polyethylene glycol or a polypropylene glycol which contains alkoxy end groups, in particular methoxy end groups.

4. The method according to at least one of claims 1 to 3, **characterized in that** the impurities in the polyalkylene ethers are polyols whose average molecular weight is in the same range or below the average molecular weight of the polyalkylene ethers to be analyzed, preferably alkylene diols and/or di- or trialkylene glycols.

5. The method according to at least one of claims 1 to 4, **characterized in that** the monolithic silica gel is designed as a reversed phase and that the eluent contains water and an organic solvent in such an amount that the elution of the analyte takes place as adsorption chromatography.

6. The method according to claim 5, **characterized in that** the eluent contains water and acetonitrile.

7. The method according to at least one of claims 1 to 6, **characterized in that** the chromatographic process is a high-pressure liquid chromatography.

8. The method according to at least one of claims 1 to 7, **characterized in that** the detection of the components of the analyte at the outlet end of the chromatography column is carried out by light scattering detection (ELSD) or by UV/VIS spectroscopy.

9. The method according to at least one of claims 1 to 8, **characterized in that** the height of the bands with low height is less than 10 %, in particular less than 5 %, of the height of the band with the greatest height.

10. Use of the method according to at least one of claims 1 to 9 for quality control of polyalkylene glycols or for preparative purification of polyalkylene glycols.

## Revendications

1. Procédé de détermination des impuretés dans les poly(éthers d'alkylène), comprenant les étapes suivantes
i) introduction de poly(éthers d'alkylène) en tant qu'analyte dans une colonne de chromatographie contenant du gel de silice monolithique en tant que phase stationnaire,
ii) éluer l'analyte avec un éluant liquide ayant une polarité telle que l'analyte est en équilibre adsorbant avec la phase stationnaire pendant la chromatographie,
iii) détection des composants de l'analyte à l'extrémité de sortie de la colonne de chromatographie, avec obtention d'un chromatogramme indiquant les différents composants de l'analyte et leur quantité qualitative en fonction du temps d'élution des différents composants, et
iv) détermination des bandes dans le chromatogramme qui présentent une hauteur ou une surface faible par rapport à la bande présentant la hauteur ou la surface la plus grande, en tant qu'indice de la présence d'impuretés dans l'analyte.

2. Procédé selon la revendication 1, **caractérisé en ce que** le polyalkylène éther est un polyéthylène glycol ou un polypropylène glycol ayant des groupes terminaux hydroxyle qui peuvent être partiellement ou totalement éthérifiés.

3. Procédé selon la revendication 2, **caractérisé en ce que** le polyalkylène éther est un polyéthylène glycol ou un polypropylène glycol qui contient des groupes terminaux alcoxy, en particulier des groupes terminaux méthoxy.

4. Procédé selon au moins l'une des revendications 1 à 3, **caractérisé en ce que** les impuretés dans les polyalkylène éthers sont des polyols dont la masse molaire moyenne se situe dans la même plage ou en dessous de la masse molaire moyenne des polyalkylène éthers à analyser, de préférence des alkylènediols et/ou des di- ou trialkylèneglycols.

5. Procédé selon au moins l'une des revendications 1 à 4, **caractérisé en ce que** le gel de silice monolithique est réalisé sous forme de phase inverse et **en ce que** l'éluant contient de l'eau et un solvant organique en une quantité telle que l'élution de l'analyte a lieu sous forme de chromatographie d'adsorption.

6. Procédé selon la revendication 5, **caractérisé en ce que** l'éluant contient de l'eau et de l'acétonitrile.

7. Procédé selon au moins l'une des revendications 1 à 6, **caractérisé en ce que** le procédé chromatographique est une chromatographie liquide haute pression.

8. Procédé selon au moins l'une des revendications 1 à 7, **caractérisé en ce que** la détection des composants de l'analyte à l'extrémité de sortie de la colonne chromatographique est réalisée par détection par diffusion de la lumière (ELSD) ou par spectroscopie UV/VIS.

9. Procédé selon au moins l'une des revendications 1 à 8, **caractérisé en ce que** la hauteur des bandes de faible hauteur est inférieure à 10 %, en particulier inférieure à 5 % de la hauteur de la bande de plus grande hauteur.

10. Utilisation du procédé selon au moins une des revendications 1 à 9 pour le contrôle de qualité de polyalkylèneglycols ou pour la purification préparative de polyalkylèneglycols.
